# EUROPÄISCHE PATENTSCHRIFT

(11) **EP 2 684 790 B1**
(45) Veröffentlichungstag und Bekanntmachung des Hinweises auf die Patenterteilung: **09.09.2015**
(21) Anmeldenummer: 13003315.2
(22) Anmeldetag: 29.06.2013
(51) Int. Cl.: B62M 9/126

(54) **Kettenführungsrolle für einen hinteren Umwerfer einer Kettenschaltung eines Fahrrads und hinterer Umwerfer mit derartiger Kettenführungsrolle**
Chain guide roller for a rear derailleur of a derailleur gear of a bicycle and rear derailleur with such a chain guide roller
Galet guide-chaîne pour un dérailleur arrière d'une chaîne de bicyclette et dérailleur arrière doté d'un tel galet guide-chaîne

(30) Priorität: 09.07.2012 DE 102012013645
(43) Veröffentlichungstag der Anmeldung: 15.01.2014
(73) Patentinhaber: SRAM Deutschland GmbH, 97424 Schweinfurt (DE)
(72) Erfinder: Braedt, Henrik, 97456 Hambach (DE); Böhm, Robert, 97453 Mainberg (DE); Hamisch, Thorsten, 97072 Würzburg (DE)

(56) Entgegenhaltungen:
- DE-A1-102011 114 699
- DE-U1-202012 100 782
- US-A- 4 573 949

## Beschreibung

Die vorliegende Erfindung betrifft eine Kettenführungsrolle für einen hinteren Umwerfer einer Kettenschaltung eines Fahrrads zur Führung einer Kette, umfassend einen ringförmigen Rollenkörper mit einer zentralen Öffnung zur drehbaren Lagerung um eine Drehachse der Kettenführungsrolle und eine Verzahnung mit einer Mehrzahl von radial vorspringenden Zähnen, die an einer Außenumfangsfläche des Rollenkörpers angeordnet sind, wobei zwischen zwei in Umfangsrichtung benachbarten Zähnen jeweils eine Zahnlücke angeordnet ist, und wobei einzelne Zähne im Bereich eines Fußkreises der Verzahnung eine vorbestimmte auf die Kette abgestimmte Zahnbreite aufweisen.

Bei Kettenschaltungen für Fahrräder ist es seit langem bekannt und üblich, den hinteren Umwerfer mit zwei Kettenführungsrollen auszubilden, die in einer vorgespannten Kettenführungsanordnung drehbar gelagert aufgenommen sind. Diese Kettenführungsrollen haben mehrere Funktionen. Sie dienen zum einen dazu, die Kette im Leertrum zu spannen und entsprechend der gewählten Übersetzungsstufe der Kettenschaltung eine ausreichende Kettenlänge bereitzustellen. Des Weiteren haben die Kettenführungsrollen in der Kettenführungsanordnung die Aufgabe, die Kette sicher zu führen, auch bei starker axialer Auslenkung bzw. Kettenschrägstellung, wie sie bei Schaltvorgängen auftreten kann.

Aus dem Stand der Technik ist eine Vielzahl von hinteren Umwerfer-Einrichtungen bekannt. So zeigt beispielsweise das Dokument DE 296 23 610 U1 einen hinteren Umwerfer für eine Kettenschaltung mit unterschiedlich großen Kettenführungsrollen.

Das Dokument DE 1 262 141 zeigt eine Kettenführungsrolle mit teilweise oder vollständig angeschrägten Profilflächen entlang der Verzahnung. Dadurch wird im Betrieb erreicht, dass einzelne Zähne der Verzahnung leichter in die Zwischenräume innerhalb der Kette eingreifen können.

In dem Dokument US 4,575,365 ist ein Umwerfer mit Kettenführungsrollen gezeigt, die in ihrem Lagerbereich in deutlichem radialem Abstand von dem Zahnlückengrund um die zentrale Öffnung herum zur Verbesserung der Lagereigenschaften größerer Materialstärke ausgebildet sind. Diese Maßnahme hat keinerlei Auswirkung auf die Führung der Kette, weil die Verdickung der Kettenführungsrollen im radial inneren Bereich nicht mit der auf der jeweiligen Kettenführungsrolle aufliegenden Kette in Wechselwirkung tritt. Eine ähnliche Lösung ist aus dem Dokument US 5,711,731 bekannt.

Wie allgemein bekannt ist, sind herkömmliche Fahrradketten bauartbedingt wechselweise mit äußeren und inneren Kettenlaschen ausgeführt, die aufeinanderfolgende Kettenrollen miteinander verbinden. Aus der wechselweisen Anordnung von äußeren und inneren Kettenlaschen ergibt sich ein entsprechender wechselnder innerer Laschenabstand, d.h. ein kleinerer Laschenabstand zwischen den Innenlaschen, und ein größerer Laschenabstand zwischen den Außenlaschen. Bei Ausführung der Außenverzahnung mit Zähnen im wesentlichen konstanter Dicke aller Zähne, wie bei den vorstehend beschriebenen Lösungen aus dem Stand der Technik der Fall, müssen die Zähne auf den kleineren Laschenabstand zwischen den inneren Kettenlaschen abgestimmt werden, so dass die Zähne zwischen äußeren Kettenlaschen mit substantiellem lateralem Spiel eingreifen. Darunter leiden aber die Führungseigenschaften der Verzahnung, weil die Kette in seitlicher (axialer) Richtung nur von jedem zweiten Laschenpaar geführt wird, nämlich immer nur von den inneren Kettenlaschen mit ihren kleineren auf die Zahnbreite abgestimmten Laschenabständen. Dies kann zu Problemen führen, insbesondere dann, wenn die Kette in bestimmten Schaltstellungen oder bei Schaltoperationen einem starken Kettenschräglauf unterliegt. In bestimmten Fahrsituationen können sich daraus starke Schwingungen ergeben, was zu einem vollständigen Herunterspringen der Kette von der jeweiligen Kettenführungsrolle führen kann. Ferner sind auch Schaltprobleme, ein Verklemmen der Kette, Geräuschentwicklungen oder erhöhter Verschleiß mögliche Folgen dieses Problems. Insbesondere bei neuartigen Kettenschaltungen mit einer Vielzahl von Ritzeln an der Hinterachse des Fahrrads können die eingeschränkten Führungseigenschaften herkömmlicher Kettenführungsanordnungen Probleme bereiten.

Das Dokument US 4,174,642 beschreibt ein Ritzel, dessen Außenverzahnung abwechselnd mit unterschiedlich dick ausgeführten Zähnen ausgebildet ist. Dadurch soll dem vorstehend geschilderten Problem des wechselnden Laschenabstands zwischen inneren Kettenlaschen und äußeren Kettenlaschen Rechnung getragen werden. Die Führungseigenschaften des Ritzels werden dadurch erhöht, dass die Zähne in ihrer Dicke an die wechselnden Laschenabstände angepasst werden, d.h. es werden abwechselnd dicke und dünne Zähne an der Außenverzahnung des Ritzels vorgesehen

Das Dokument US 4573 949 A wird als der nächste Stand der Technik betrachtet und offenbart die Präambel des Anspruchs 1.

Der Erfindung liegt die Aufgabe zu Grunde, eine Kettenführungsrolle der eingangs bezeichneten Art sowie einen hiermit ausgebildeten Umwerfer mit verbesserten Führungseigenschaften bereitzustellen.

Diese Aufgabe wird durch eine Kettenführungsrolle der eingangs bezeichneten Art gelöst, bei der vorgesehen ist, dass die Kettenführungsrolle an zumindest einem Teil der Zahnlücken im Bereich nahe eines Zahnlückengrundes oder/und an zumindest einem Teil der Zähne wenigstens einen Führungsabschnitt mit größerer Breite zum Stützen von Kettenlaschen aufweist, insbesondere der inneren Kettenlaschen, als die maximale Zahnbreite wenigstens eines der benachbarten Zähne.

Anders als beim vorstehend beschriebenen Stand der Technik gemäß dem Dokument US 4,174,642 werden durch die erfindungsgemäße Maßnahme die Führungseigenschaften der jeweiligen Kettenführungsrolle dadurch verbessert, dass die Kette im Bereich des Zahnlückengrundes oder/und auch entlang des Zahns besser geführt wird. Dies wird dadurch erreicht, dass der Führungsabschnitt jeweils wenigstens eine Kettenlasche eines inneren Laschenpaares der Kette am Zahnlückengrund oder entlang der kraftübertragenden Zahnflanke in radialer Richtung abstützt, so dass neben der zwischen den beiden Laschen angeordneten Kettenrolle auch diese wenigstens eine innere Kettenlasche gestützt wird. Obgleich bei konstanten Zahnbreiten das auf das innere Laschenpaar folgende äußere Laschenpaar mit lateralem Spiel den folgenden Zahn umgreift, sorgt der Führungsabschnitt für eine Verbesserung der Führungseigenschaften an dem Zahnlückengrund benachbart zu dem Zahn, der mit geringem Spiel und damit führend in dem Zwischenraum zwischen dem inneren Laschenpaar eingreift. Der geführte Kettenabschnitt lässt sich mit der erfindungsgemäßen Maßnahme auch bei einer Verzahnung mit Zähnen mit konstant bleibender Zahnbreite dadurch verlängern, dass die inneren Kettenlaschen nicht nur über den in ihren Zwischenraum eingreifenden Zahn, sondern auch im Bereich des Zahnlückengrundes geführt sind. Es wird also nicht nur jedes zweite Kettenglied über jeden zweiten Zahn der Kettenführungsrolle geführt, sondern auch Bereiche der Kette im Bereich einzelner Abschnitte der Kettenführungsrolle am Zahnlückengrund.

Dabei ist zu berücksichtigen, dass je nach verwendeter Kette ein gewisser Überstand der Kettenlaschen in radialer Richtung über die Kettenrollen gegeben ist. Diesem Zustand eines radialen Überstands der Kettenlaschen soll Rechnung getragen werden. Aus diesem Grund ist in einer Weiterbildung der Erfindung vorgesehen, dass der wenigstens eine Führungsabschnitt gegenüber dem Zahnlückengrund radial einwärts versetzt ist. Beispielsweise liegt der Überstand der inneren Kettenlaschen gegenüber den Kettenrollen in einem Bereich von 0,5 mm, wobei ein geringes Spiel zwischen Kettenbolzen und diese umgebende Kettenrollen berücksichtigt ist. Demzufolge wäre der wenigstens eine Führungsabschnitt gegenüber dem Zahnlückengrund um dasselbe Maß, also im Beispielsfall um 0,5 mm, radial einwärts zurückgesetzt. Insbesondere kann in diesem Zusammenhang vorgesehen sein, dass der wenigstens eine Führungsabschnitt gegenüber dem Fußkreis der Verzahnung radial einwärts versetzt ist, um den radialen Überstand der Kettenlaschen gegenüber dem Kettenrollen zu berücksichtigen.

Eine Weiterbildung der Erfindung sieht vor, dass sich der wenigstens eine Führungsabschnitt zumindest abschnittsweise entlang eines Zahns erstreckt. Durch diese Maßnahme lässt sich erreichen, dass die innere Kettenlasche auch im Bereich der Zahnflanke radial abgestützt wird. Ferner wird dadurch erreicht, dass zusätzlich zu der erfindungsgemäße Lösung einer Führung der inneren Kettenlaschen im Bereich des Zahnlückengrundes sowie der Zahnflanke auch noch äußere Kettenlaschen durch breiter ausgeführte Zähne axial geführt werden. Diese Ausführungsvariante der Erfindung geht also nicht mehr von einer Verzahnung mit Zähnen mit konstanter Breite aus, sondern sieht eine Kettenführungsrolle mit Zähnen alternierender Zahnbreite entsprechend des wechselnden Abstands zwischen äußeren und inneren Kettenlaschen vor. Dadurch wird die Führungsfunktion weiter verbessert, da die breiter ausgeführten Zähne in die breiteren Zwischenräume zwischen den äußeren Laschenpaaren der Kette lediglich mit geringem Spiel, das heißt führend, eingreifen.

Bei dieser Ausführungsform kann ferner ohne vorgesehen sein, dass der wenigstens eine Führungsabschnitt gegenüber der Zahnflanke in Umfangsrichtung zurückgesetzt ist. Dadurch wird das Eingreifen des jeweiligen Zahns in den Zwischenraum zwischen dem äußeren Laschenpaar erleichtert. Vorzugsweise sind bei dieser Ausführungsvariante die jeweiligen Führungsabschnitte jeweils im Bereich einer Lastflanke der Kettenführungsrolle angeordnet, das heißt im Bereich einer Zahnflanke, die im Betrieb kraftübertragend belastet wird.

Die Ausgestaltung des Führungsabschnitts lässt sich erfindungsgemäß in verschiedenen Varianten ausbilden. Gemäß einer Ausführungsform der Erfindung kann vorgesehen sein, dass der wenigstens eine Führungsabschnitt von einem in Richtung der Drehachse der Kettenführungsrolle axial vorspringenden Ringabschnitt oder umlaufenden Ring gebildet ist. Dies hat den Vorteil, dass die Kettenführungsrolle relativ einfach hergestellt werden kann, wobei der axial vorspringende Ringabschnitt die Kettenführungsrolle mechanisch verstärkt. Es ist darauf hinzuweisen, dass der axial vorspringenden Ringabschnitt in einer derartigen radialen Position angeordnet ist, dass die vorstehend beschriebene Abstützfunktion für die im Bereich des Zahnlückengrunds angreifenden Kettenlaschenabschnitte gewährleistet ist. In dieser Hinsicht unterscheidet sich die Erfindung von denjenigen Lösungen im Stand der Technik, bei denen lediglich ein Bereich um die zentrale Öffnung der Kettenführungsrolle zur Verbesserung der Lagerungseigenschaften mit größerer Materialstärke ausgeführt ist, wobei dieser verstärkt ausgeführte Bereich jedoch in deutlichem radialem Abstand zu den angreifenden Kettenlaschenabschnitten angeordnet ist.

Alternativ zu der Ausführungsform mit einem Führungsabschnitt in Form eines durchgehenden Ringabschnitts kann erfindungsgemäß vorgesehen sein, dass der wenigstens eine Führungsabschnitt von einem in Richtung der Drehachse der Kettenführungsrolle axial vorspringenden lokalen Vorsprung im Bereich des Zahnlückengrunds oder/und im Bereich eines Zahns gebildet ist. Derartige lokale Vorsprünge können beispielsweise lediglich an einzelnen Zähnen bzw. einzelnen Zahnlückengrundabschnitten vorgesehen sein, oder sich bogenförmig über mehrere Zähne bzw. Zahnlückengrundabschnitte hinweg erstrecken. Wie vorstehend bereits ausgeführt, ist es möglich, an jedem zweiten Zahnlückengrundabschnitt oder an jedem zweiten Zahn entsprechende Führungsabschnitte vorzusehen. Die Ausbildung einer Mehrzahl von einzelnen Führungsabschnitten hat im Gegensatz zu einem durchgehenden ununterbrochenen ringförmigen Führungsabschnitt den Vorteil, dass sich ein Selbstreinigungseffekt der Kette und der Kettenführungsrolle im Betrieb einstellt.

Ferner ist es im Hinblick auf die Ausbildung der Führungsabschnitte an der Kettenführungsrolle möglich, dass der wenigstens eine Führungsabschnitt an lediglich einer axialen Seitenfläche der Kettenführungsrolle angeordnet ist. Diese nicht beanspruchte Ausführungsvariante kann bereits deshalb ausreichen, weil die Führungsfunktion insbesondere beim Schalten in einer Richtung von kleineren Ritzeln auf größere Ritzel erforderlich ist. Beim Schalten in einer Richtung von einem größeren Ritzel auf ein kleineres Ritzel kann hingegen eine gewisse axiale Beweglichkeit der Kette von Vorteil sein. Bei der erfindungsgemäßen Ausführungsform der Erfindung ist an beiden axialen Seitenflächen der Kettenführungsrolle jeweils wenigstens ein Führungsabschnitt vorgesehen.

Eine Weiterbildung der Erfindung sieht vor, dass die Kettenführungsrolle im Bereich einander zugewandter Zahnflanken sowie im Bereich des Zahnlückengrunds zumindest abschnittsweise angeschrägt ist. Die Anschrägung einander zugewandter Zahnflanken, insbesondere im Bereich des Zahnkopfes einzelner oder aller Zähne, erleichtert das Eindringen der Zähne in die Zwischenräume zwischen den jeweiligen Kettenlaschen. In diesem Zusammenhang kann vorgesehen sein, dass der Führungsabschnitt außerhalb des angeschrägten Bereichs angeordnet ist. Alternativ hierzu ist es aber auch möglich, dass sich der wenigstens eine Führungsabschnitt in den angeschrägten Bereich hinein erstreckt. Dadurch lassen sich die Führungseigenschaften gemäß der vorliegenden Erfindung zum Abstützen der Kettenlaschen trotz Anschrägung verbessern.

Eine Weiterbildung der Erfindung sieht vor, dass der wenigstens eine Führungsabschnitt einen in Richtung der Drehachse betrachtet polygonalen, vorzugsweise parallelogrammartig ausgebildeten Vorsprung umfasst, dessen radial äußere Fläche tangential zum Fußkreis oder parallel zu einer an den Fußkreis angelegten Tangente verläuft. Wie vorstehend bereits angedeutet, kann sich der Führungsabschnitt auch zumindest teilweise entlang eines Zahns bis zum Zahnkopf bzw. bis zur Zahnspitze hin erstrecken.

Zu Reinigungszwecken und aus Gründen der Gewichtseinsparung kann ferner vorgesehen sein, dass der Rollenkörper der erfindungsgemäßen Kettenführungsrolle in regelmäßigen Winkelabständen angeordnete axiale Durchbrüche aufweist.

Die Erfindung betrifft ferner einen hinteren Umwerfer einer Kettenschaltung eines Fahrrads zur Führung einer Kette mit wenigstens einer Kettenführungsrolle der vorstehend beschriebenen Art.

Die Erfindung wird im Folgenden beispielhaft anhand der beiliegenden Figuren erläutert. Es stellen dar:
- Fig. 1: eine schematische Übersichtsansicht einer Kettenschaltung zur Erläuterung;
- Fig. 2: eine räumliche Darstellung eines Kettenabschnitts;
- Fig. 3: eine Draufsicht auf einen Kettenabschnitt;
- Fig. 4: eine Vorderansicht einer Kettenführungsrolle gemäß einer ersten nicht beanspruchten Ausführungsform der Erfindung;
- Fig. 5: eine Schnittansicht entsprechend der Schnittlinie V-V aus Figur 4 der ersten nicht beanspruchten Ausführungsform der Erfindung;
- Fig. 6: eine vergrößerte Ansicht des Bildausschnitts VI aus Figur 5;
- Fig. 7: eine Vorderansicht einer Kettenführungsrolle gemäß einer zweiten Ausführungsform der Erfindung;
- Fig. 8: eine Schnittansicht entsprechend der Schnittlinie VIII-VIII aus Figur 7 der zweiten Ausführungsform der Erfindung;
- Fig. 9: eine vergrößerte Ansicht des Bildausschnitts IX aus Figur 8;
- Fig. 10: eine Vorderansicht einer Kettenführungsrolle gemäß einer dritten Ausführungsform der Erfindung;
- Fig. 11: eine Schnittansicht entsprechend der Schnittlinie XI-XI aus Figur 10 der dritten Ausführungsform der Erfindung; und
- Fig. 12: eine Schnittansicht entsprechend der Schnittlinie XII-XII aus Figur 10 der dritten Ausführungsform der Erfindung.

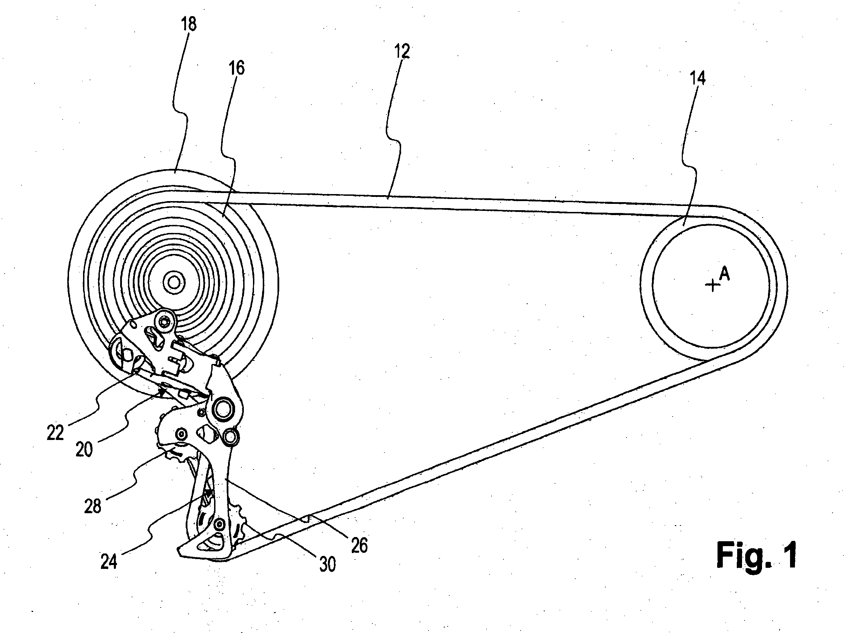

In Fig. 1 ist eine Schaltungsanordnung für ein Fahrrad schematisch gezeigt und allgemein mit 10 bezeichnet. Diese umfasst eine endlose Kette 12, die um ein schematisch gezeichnetes, um eine Drehachse A antreibbares vorderes Kettenrad 14 sowie um ein Ritzel 16 eines hinteren Ritzelsatzes 18 herumgeführt ist. Der hintere Ritzeisatz 18 ist im gezeigten Beispielsfall mit insgesamt 11 unterschiedlich großen Ritzeln ausgeführt.

In Figur 1 erkennt man ferner einen hinteren Umwerfer 20, der in nicht dargestellter Weise an einem Fahrradrahmen anbringbar ist. Der hintere Umwerfer 20 weist eine Hebelanordnung 22 auf, mit der dieser über ein nicht gezeigtes Steuerkabel gegen eine Federvorspannung verstellbar ist. Ferner weist der hintere Umwerfer 20 eine Kettenführungsanordnung 24 mit einem Kettenführungsträger 26 auf, an dem zwei Kettenführungsrollen 28,30 drehbar gelagert sind. Die Kettenführungsanordnung 24 dient dazu, die Kette 12 im Antriebsfall zu führen, das untere nicht angetriebene Kettentrum durch eine auf die Kettenführungsanordnung 24 ausgeübte Vorspannkraft zu spannen und die Kette 12 bei einer Schaltoperationen des hinteren Umwerfers 20 in eine Soll-Stellung zu führen und in dieser nach der Schaltoperation dauerhaft zu positionieren.

Die Kette 12 ist S-förmig zu diesen Zwecken durch die Kettenführungsanordnung 24 hindurchgeführt, so dass sie sich mit beiden Kettenführungsrollen 28 und 30 in Eingriff befindet und von diesen positioniert und geführt wird. Die Kettenführungsrollen 28 und 30 werden im Folgenden noch im Detail beschrieben.

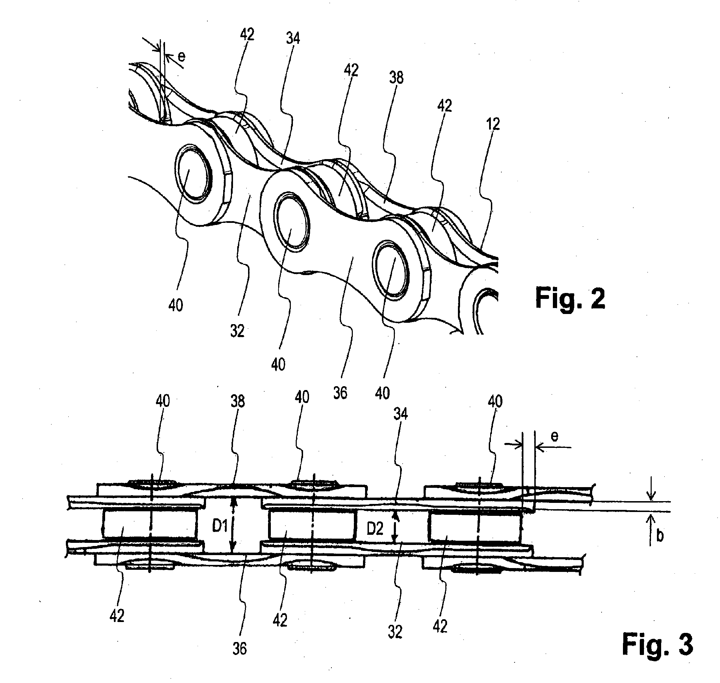

Figuren 2 und 3 zeigen verschiedene Ansichten eines Ausschnitts der Kette 12. Darin erkennt man, dass die Kette 12 jeweils Paare aus inneren Kettenlaschen 32, 34 und äußeren Kettenlaschen 36, 38 aufweist. Diese sind wechselweise angeordnet, das heißt auf ein Paar der inneren Kettenlaschen 32, 34 folgt ein Paar der äußeren Kettenlaschen 36, 38. Die einzelnen Kettenlaschen sind über Kettenbolzen 40 miteinander verbunden, die sich quer zur Längsrichtung der Kette 12 erstrecken. Die Kettenbolzen 40 sind von hohlzylindrisch ausgebildeten, drehbar auf den Kettenbolzen 40 angeordneten Kettenrollen 42 umgeben.

Man erkennt, dass die Paare aus Kettenlaschen 32, 34 sowie 36, 38 unterschiedliche Abstände aufweisen. Die äußeren Kettenlaschen 36, 38 sind in einem Abstand D1 angeordnet, der größer ist als ein Abstand D2 zwischen den inneren Kettenlaschen 32, 34. Der Abstand D2 entspricht in etwa der Breite der Kettenrollen 42 zuzüglich eines geringes Spiels zwischen den Kettenrollen 42 und den inneren Kettenlaschen 32, 34. Der Abstand D1 ist um die Breite 2b der beiden inneren Kettenlaschen 32, 34 größer als der Abstand D2.

Ferner erkennt man, dass die inneren Kettenlaschen 32, 34 um einen Überstand e jeweils über den Außenumfang der Kettenrollen 42 hinaus stehen. Dieser Überstand e bleibt über etwa 260° um die Außenumfangsfläche der Kettenrollen 42 herum im Wesentlichen konstant dimensioniert, wie man etwa in Figur 2 erkennen kann.

Schließlich erkennt man, dass im Bereich der Zwischenräume zwischen den beiden Kettenlaschen 32, 34 bzw. 36, 38 die Kettenlaschen 32, 34 bzw. 36, 38 jeweils angeschrägt sind, um das Einlaufen eines Zahns im Betrieb zu erleichtern.

Im Folgenden soll auf eine erste Ausführungsform der Erfindung hinsichtlich der Gestaltung der Kettenführungsrollen 28, 30 eingegangen werden. Es wird beispielhaft die Kettenführungsrolle 28 beschrieben, wobei die Ausführungen gleichermaßen für die Kettenführungsrolle 30 gelten.

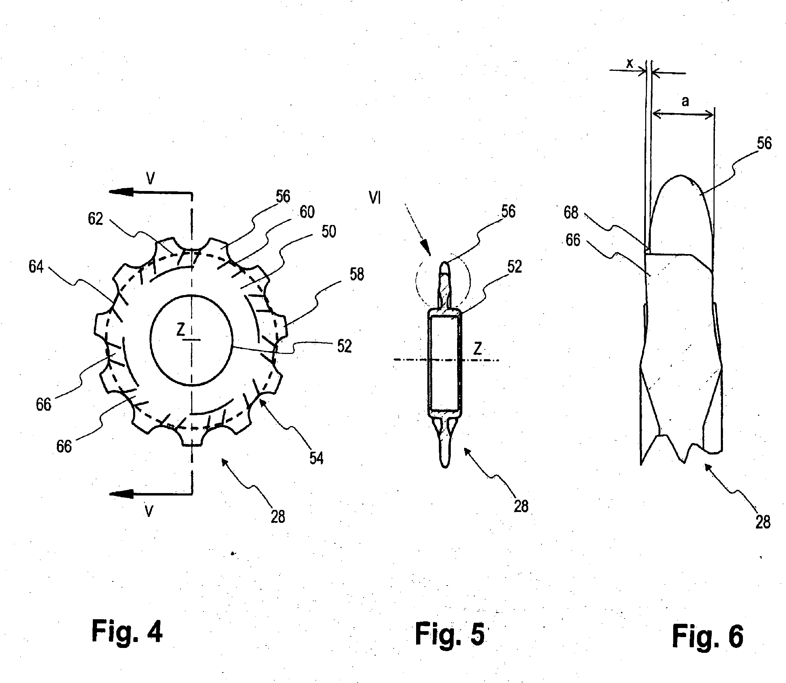

Die in den Figuren 4 bis 6 beschriebene Kettenführungsrolle 28 weist einen ringförmigen Rollenkörper 50 auf, der mit einer zentralen Öffnung 52 versehen ist. Diese zentrale Öffnung 52 dient zur Aufnahme eines Kugellagers oder dergleichen. An ihrer Außenumfangsfläche weist die Kettenführungsrolle 28 eine Verzahnung 54 mit insgesamt elf nach radial außen vorspringenden Zähnen auf, wobei zwischen den beispielhaft betrachteten in Umfangsrichtung aufeinanderfolgenden Zähnen 56, 58 eine Zahnlücke 60 vorgesehen ist. In Figur 4 ist ein Fußkreis 62 strichliniert eingezeichnet, der durch die radial am weitesten innenliegenden Punkte der Zahnlücken 60 verläuft. Der Bereich um diesen radial am weitesten innen liegenden Punkt der Zahnlücken 60 wird im Folgenden auch als Zahnlückengrund bezeichnet und ist in Figur 4 mit dem Bezugszeichen 64 versehen.

Wie man in den Figuren 5 und 6 erkennt, sind alle Zähne 56 in dem Bereich, in dem sie mit der Kette 12 in Wechselwirkung treten und in die Zwischenräume zwischen den Kettenlaschen greifen, mit einer im Wesentlichen konstant bleibenden Breite a ausgeführt. Im Bereich nahe des Zahnlückengrundes 64 sind jeweils zusätzliche Führungsabschnitte vorgesehen, die als in axialer Richtung vorstehende Vorsprünge 66 mit im wesentlichen parallelogrammartiger Geometrie ausgestaltet sind (Fig. 4). Dadurch ergibt sich jeweils an jedem Zahnlückengrund 64 ein seitlicher Vorsprung 66 mit dem Maß x mit einer nach radial außen gerichteten, in Umfangsrichtung verlaufenden Stützfläche 68, wie in Figur 6 eingezeichnet. Diese seitlichen Vorsprünge 66 sind geringfügig unterhalb des Zahnlückengrundes 64 und unterhalb des Fußkreises 62 angeordnet, d.h. bezüglich der Mittelachse Z der Kettenführungsrolle 28 nach radial innen versetzt.

Die Vorsprünge 66 mit ihren jeweiligen Stützflächen 68 dienen dazu, in Wechselwirkung mit der Kette 12 zu treten und die inneren Kettenlaschen 32, 34 im Bereich der Kettenrollen 42 bezüglich der Mittelachse Z der Kettenführungsrolle 28 radial abzustützen. Das Maß, um das der seitliche Vorsprung 66 mit seiner Stützfläche 68 nach radial einwärts versetzt ist, entspricht in etwa dem Maß e des Überstands der inneren Kettenlaschen 32, 34 über die Kettenrollen 42. Dadurch wird gewährleistet, dass die Kette 12 über die eingreifenden Zähne 56 geführt wird, aber auch im Bereich der Zahnlücken 60 über die überstehenden inneren Kettenlaschen 32, 34 nahe den Kettenrollen 42 auf den jeweiligen Flächen 68 der Vorsprünge 66 radial abgestützt wird. Durch diese zusätzliche Abstützfunktion über die Vorsprünge 66 werden die Führungseigenschaften der Kettenführungsrolle 28 wesentlich verbessert.

Insbesondere im Hinblick auf die größeren Laschenabstände D1 zwischen den äußeren Kettenlaschen 36, 38, die wegen des Spiels zwischen diesen Kettenlaschen 36, 38 und dem eingreifenden Zahn 56 die Kette 12 weniger präzise führen, als wegen der kleineren Laschenabstände D2 zwischen den inneren Kettenlaschen 32,34 der fall, haben die Vorsprünge 66 den Vorteil, dass die Kette 12 nicht nur über die in die Kettenzwischenräume eingreifenden Zähne 56, sondern auch im Bereich der Zahnlücken 60 zusätzlich geführt werden. Dadurch kann wirksam einer Fehlfunktion entgegengewirkt werden, beispielsweise Schwingungen bei starkem Kettenschräglauf, Schaltproblemen, Kettenklemmen, Geräuschentwicklungen und/oder erhöhtem Verschleiß.

Es sei angemerkt, dass bei der Ausführungsform gemäß Figuren 4 bis 6 lediglich auf einer Seite der Kettenführungsrolle 28 Vorsprünge 66 vorgesehen sind. Bei einer abgewandelten Ausführungsform können diese Vorsprünge 66 auch auf beiden Seiten der Kettenführungsrolle 28 vorgesehen werden. Ferner sei angemerkt, dass die einzelnen Vorsprünge 66 einen selbstreinigenden Effekt haben.

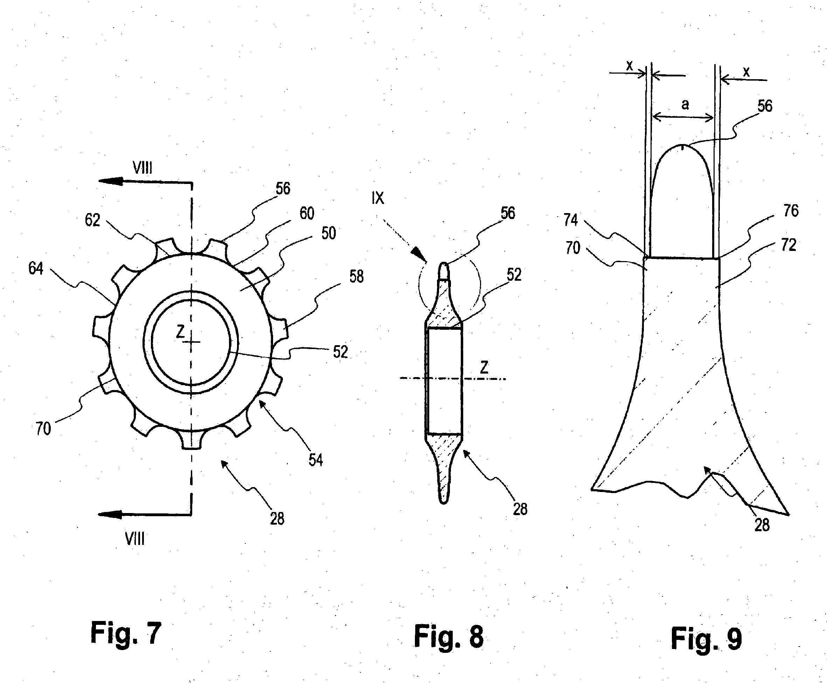

Figuren 7 bis 9 zeigen eine zweite Ausführungsform der Erfindung. Zur Vermeidung von Wiederholungen und zur Erleichterung der Beschreibung wird für diese zweite Ausführungsform lediglich auf die Unterschiede zur ersten Ausführungsform eingegangen. Ferner werden die vorstehend verwendeten Bezugszeichen für gleichwirkende oder gleichartige Komponenten weiterverwendet.

Die Ausführungsform gemäß Figuren 7 bis 9 unterscheidet sich von der Ausführungsform gemäß den Figuren 4 bis 6 lediglich darin, dass nicht einzelne Vorsprünge 66 an jedem Zahngrund 64 vorgesehen sind, sondern auf beiden Seiten der Kettenführungsrolle 28 jeweils im Bereich des Fußkreises 62 wiederum leicht nach unten versetzt ein in Umfangsrichtung geschlossener vorspringender Ringbereich 70 bzw. 72 vorgesehen ist. Der vorspringende Ringbereich 70 weist eine in Umfangsrichtung verlaufende, nach radial außen gerichtete Stützfläche 74 auf. Der vorspringende Ringbereich 72 weist einen Umfangsrichtung verlaufende nach radial außen gerichtete Stützfläche 76 auf. Die beiden Stützflächen 74, 76 dienen wiederum zum Abstützen der inneren Kettenlaschen 32, 34 im Bereich der Kettenrollen 42 gemäß vorstehender Beschreibung.

Die Ausführungsform gemäß Figuren 7 bis 9 zeichnet sich durch eine verhältnismäßig einfache Fertigung aus.

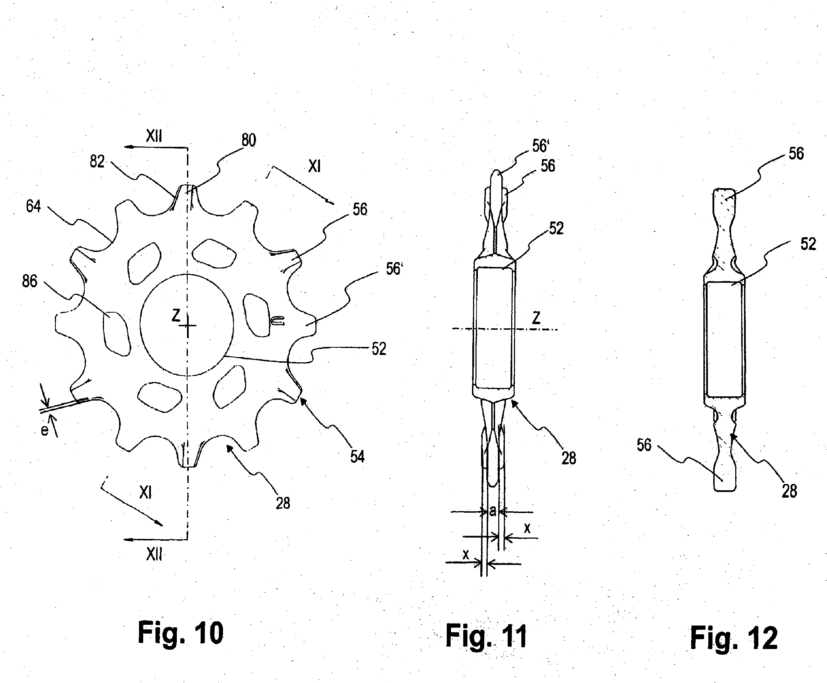

Figuren 10 bis 12 zeigen eine dritte Ausführungsform der Erfindung. Zur Vermeidung von Wiederholungen und zur Erleichterung der Beschreibung wird für diese dritte Ausführungsform wiederum nur auf die Unterschiede zur ersten und zweiten Ausführungsform eingegangen. Ferner werden die vorstehend verwendeten Bezugszeichen für gleichwirkende oder gleichartige Komponenten weiterverwendet.

Die Ausführungsform gemäß Figuren 10 bis 12 ist ähnlich der Ausführungsform gemäß den Figuren 4 bis 6 ausgeführt, jedoch mit einer geraden Anzahl von insgesamt 12 Zähnen. Die Vorsprünge 80 sind nur an jedem zweiten Zahn 56 vorgesehen. Diese Vorsprünge 80 erstrecken entlang des jeweiligen Zahns 56, so dass jeder zweite Zahn 56 mit einer größeren Materialstärke ausgeführt ist, als die dazwischenliegenden Zähne 56' ohne Vorsprünge 80. Die Vorsprünge 80 sind auf beiden Seiten der Zähne 56 angeordnet. Dadurch ist gewährleistet, dass die Zähne 56, 56' in ihrer Materialstärke jeweils an die wechselweise Aufnahme folgenden größeren und kleineren Abstände D1 und D2 zwischen den inneren und äußeren Kettenlaschen 32, 34 und 36, 38 angepasst sind.

Die Funktion der Vorsprünge 80 erschöpft sich aber nicht in der Verdickung jedes zweiten Zahns 56. Wie man erkennen kann, erstrecken sich die Vorsprünge 80 nahe der zur Kraftübertragung belasteten Zahnflanke 82 des Zahns 56, jedoch wiederum um das Maß e zurückversetzt, das dem Überstand e der inneren Kettenlaschen 32,34 gegenüber dem Kettenrollen 42 entspricht. Ferner erstrecken sich die Vorsprünge 80 bis in den Bereich des Zahnlückengrundes 64, wobei die Vorsprünge 80 eine leicht gerundete Flanke 84 aufweisen. Der schräge Verlauf der Vorsprünge 80 und dieser Abschnitt 84 der Vorsprünge 80 im Bereich des Zahnlückengrundes 64 dienen dazu, die inneren Kettenlaschen 32, 34 in radialer Richtung zu stützen, wie vorstehend mit Bezug auf die vorangehenden Ausführungsbeispiele beschrieben.

Die Ausführungsform gemäß den Figuren 10 bis 12 zeigt also alternierende Zahndicken bei den Zähnen 56 und 56', die in die Kettenzwischenräume mit alternierenden Laschenabständen D1 und D2 eingreifen. Zusätzlich wird die Führung durch die in Form der Vorsprünge 80 ausgebildeten Führungsabschnitte verbessert, die auch im Bereich der Zahnflanke 82 und des Zahnlückengrundes 64 die inneren Kettenlaschen 32, 34 insbesondere radial stützen.

Die Ansichten gemäß Figuren Ziffer 11 und 12 zeigen jeweils Schnitte durch die dickeren und inneren Zähne.

Schließlich erkennt man bei der Ausführungsform gemäß den Figuren 10 bis 12 auch noch Ausnehmungen 86, die in regelmäßigen Winkelabständen im Rollenkörper angeordnet sind. Diese Maßnahme trägt zur Gewichtseinsparung bei.

Insgesamt zeigt die Erfindung verschiedene Ausführungsformen, die dazu beitragen, die Führungseigenschaften der Kettenführungsrolle 28 für einen hinteren Umwerfer einer Fahrradkettenschaltung deutlich zu verbessern. Dies ist insbesondere in solchen Anwendungsfällen vorteilhaft, bei denen wegen einer Vielzahl von Ritzeln ein relativ starker Kettenschräglauf während Schaltoperationen aber auch im Betrieb zwischen zwei Schaltoperationen auftreten kann. Dabei werden gegenüber dem Stand der Technik verbesserte Führungseigenschaften zur Gewährleistung eines fehlerfreien Betriebs mit geringem Verschleiß gefordert. Dieser Forderung wird die vorliegende Erfindung gerecht.

## Patentansprüche

1. Kettenführungsrolle (28, 30) für einen hinteren Umwerfer (24) einer Kettenschaltung eines Fahrrads zur Führung einer Kette (12), umfassend
- einen ringförmigen Rollenkörper (50) mit einer zentralen Öffnung (52) zur drehbaren Lagerung um eine Drehachse (Z) der Kettenführungsrolle (28, 30);
- eine Verzahnung (54) mit einer Mehrzahl von radial vorspringenden Zähnen (56), die an einer Außenumfangsfläche des Rollenkörpers (50) angeordnet sind, wobei zwischen zwei in Umfangsrichtung benachbarten Zähnen (56) jeweils eine Zahnlücke (60) angeordnet ist, wobei einzelne Zähne (56) im Bereich eines Fußkreises (62) der Verzahnung (54) eine vorbestimmte auf die Kette (12) abgestimmte Zahnbreite (a) aufweisen,
dass die Kettenführungsrolle (28, 30) an zumindest einem Teil der Zahnlücken (60) im Bereich nahe eines Zahnlückengrundes (64) oder/und an zumindest einem Teil der Zähne (56) wenigstens einen Führungsabschnitt (66; 70, 72; 80) mit größerer Breite (a+x) aufweist, als die Zahnbreite (a) wenigstens eines der benachbarten Zähne (56; 56'); **dadurch gekennzeichnet, dass** an beiden axialen Seitenflächen der Kettenführungsrolle (28, 30) jeweils wenigstens ein Führungsabschnitt (70, 72; 80) vorgesehen ist.

2. Kettenführungsrolle (28, 30) nach Anspruch 1,
**dadurch gekennzeichnet, dass** der wenigstens eine Führungsabschnitt (66; 70, 72) gegenüber dem Zahnlückengrund (64) radial einwärts versetzt ist.

3. Kettenführungsrolle (28, 30) nach Anspruch 1 oder 2,
**dadurch gekennzeichnet, dass** der wenigstens eine Führungsabschnitt (66; 70, 72) gegenüber dem Fußkreis (62) der Verzahnung (54) radial einwärts versetzt ist.

4. Kettenführungsrolle (28, 30) nach einem der Ansprüche 1 bis 3,
**dadurch gekennzeichnet, dass** sich der wenigstens eine Führungsabschnitt (80) zumindest abschnittsweise entlang eines Zahns (56) erstreckt.

5. Kettenführungsrolle (28, 30) nach Anspruch 4,
**dadurch gekennzeichnet, dass** der wenigstens eine Führungsabschnitt (80) gegenüber der Zahnflanke (82) in Umfangsrichtung zurückgesetzt ist.

6. Kettenführungsrolle (28, 30) nach einem der vorangehenden Ansprüche,
**dadurch gekennzeichnet, dass** der wenigstens eine Führungsabschnitt (70, 72) von einem in Richtung der Drehachse der Kettenführungsrolle (28, 30) axial vorspringenden Ringabschnitt oder umlaufenden Ring gebildet ist.

7. Kettenführungsrolle (28, 30) nach einem der Ansprüche 1 bis 5,
**dadurch gekennzeichnet, dass** der wenigstens eine Führungsabschnitt (66; 80) von einem in Richtung der Drehachse der Kettenführungsrolle (28, 30) axial vorspringenden lokalen Vorsprung im Bereich des Zahnlückengrunds (64) oder/und eines Zahns (56) gebildet ist.

8. Kettenführungsrolle (28, 30) nach einem der vorangehenden Ansprüche,
**dadurch gekennzeichnet, dass** die Kettenführungsrolle (28, 30) im Bereich einander zugewandter Zahnflanken sowie im Bereich des Zahnlückengrunds zumindest abschnittsweise angeschrägt ist.

9. Kettenführungsrolle (28, 30) nach Anspruch 1,
**dadurch gekennzeichnet, dass** der Führungsabschnitt außerhalb des angeschrägten Bereichs angeordnet ist.

10. Kettenführungsrolle (28, 30) nach einem der Ansprüche 1 und 9,
**dadurch gekennzeichnet, dass** sich der wenigstens eine Führungsabschnitt in den angeschrägten Bereich hinein erstreckt.

11. Kettenführungsrolle (28, 30) nach einem der vorangehenden Ansprüche,
**dadurch gekennzeichnet, dass** der wenigstens eine Führungsabschnitt (66) einen in Richtung der Drehachse (Z) betrachtet polygonalen, vorzugsweise parallelogrammartig ausgebildeten Vorsprung umfasst, dessen radial äußere Fläche tangential zum Fußkreis (62) oder parallel zu einer an den Fußkreis (62) angelegten Tangente verläuft.

12. Kettenführungsrolle (28, 30) nach einem der vorangehenden Ansprüche,
**dadurch gekennzeichnet, dass** der Rollenkörper (50) in regelmäßigen Winkelabständen angeordnete axiale Durchbrüche (86) aufweist.

13. Hinterer Umwerfer (20) einer Kettenschaltung eines Fahrrads zur Führung einer Kette (12) mit wenigstens einer Kettenführungsrolle (28, 30) nach einem der vorangehenden Ansprüche.

## Claims

1. Chain guide roller (28, 30) for a rear derailleur (24) of a derailleur gear of a bicycle for guiding a chain (12), comprising
- an annular roller body (50) with a central opening (52) for the rotatable mounting about an axis of rotation (Z) of the chain guide roller (28, 30);
- a toothing (54) with a plurality of radially projecting teeth (56) which are arranged on an outer circumferential surface of the roller body (50), wherein a tooth space (60) is arranged in each case between two teeth (56) which are adjacent in the circumferential direction, wherein individual teeth (56) have a predetermined tooth width (a) matched to the chain (12) in the region of a root circle (62) of the toothing (54),
- in that the chain guide roller (28, 30) has, in the region of the vicinity of a tooth space base (64) on at least some of the tooth spaces (60) and/or on at least some of the teeth (56), at least one guide section (66; 70, 72; 80) having a greater width (a+x) than the tooth width (a) of at least one of the adjacent teeth (56; 56') ;
**characterized in that** at least one guide section (70, 72; 80) is provided in each case on the two axial side surfaces of the chain guide roller (28, 30).

2. Chain guide roller (28, 30) according to Claim 1, **characterized in that** the at least one guide section (66; 70, 72) is offset radially inwards in relation to the tooth space base (64).

3. Chain guide roller (28, 30) according to Claim 1 or 2, **characterized in that** the at least one guide section (66; 70, 72) is offset radially inwards in relation to the root circle (62) of the toothing (54).

4. Chain guide roller (28, 30) according to one of Claims 1 to 3, **characterized in that** the at least one guide section (80) extends at least in sections along a tooth (56).

5. Chain guide roller (28, 30) according to Claim 4, **characterized in that** the at least one guide section (80) is set back in the circumferential direction in relation to the tooth flank (82).

6. Chain guide roller (28, 30) according to one of the preceding claims, **characterized in that** the at least one guide section (70, 72) is formed by a ring section projecting axially in the direction of the axis of rotation of the chain guide roller (28, 30) or by an encircling ring.

7. Chain guide roller (28, 30) according to one of Claims 1 to 5, **characterized in that** the at least one guide section (66; 80) is formed in the region of the tooth space base (64) and/or of a tooth (56) by a local projection projecting axially in the direction of the axis of rotation of the chain guide roller (28, 30).

8. Chain guide roller (28, 30) according to one of the preceding claims, **characterized in that** the chain guide roller (28, 30) is bevelled at least in sections in the region of mutually facing tooth flanks and in the region of the tooth space base.

9. Chain guide roller (28, 30) according to Claim 1, **characterized in that** the guide section is arranged outside the bevelled region.

10. Chain guide roller (28, 30) according to either of Claims 1 and 9, **characterized in that** the at least one guide section extends into the bevelled region.

11. Chain guide roller (28, 30) according to one of the preceding claims, **characterized in that** the at least one guide section (66) comprises a projection which is polygonal, preferably of parallelogram-like design, as viewed in the direction of the axis of rotation (Z), and the radially outer surface of which runs tangentially to the root circle (62) or parallel to a tangent applied to the root circle (62).

12. Chain guide roller (28, 30) according to one of the preceding claims, **characterized in that** the roller body (50) has axial apertures (86) arranged at regular angular distances.

13. Rear derailleur (20) of a derailleur gear of a bicycle for guiding a chain (12) comprising at least one chain guide roller (28, 30) according to one of the preceding claims.

## Revendications

1. Galet guide-chaîne (28, 30) pour un dérailleur arrière (24) d'un dérailleur d'une bicyclette pour le guidage d'une chaîne (12), comprenant
- un corps de galet annulaire (50) avec une ouverture centrale (52) pour le support rotatif autour d'un axe de rotation (Z) du galet guide-chaîne (28, 30);
- une denture (54) avec une multiplicité de dents radialement saillantes (56), qui sont disposées sur une surface périphérique extérieure du corps de galet (50), dans lequel un entre-dents (60) est respectivement disposé entre deux dents (56) voisines dans la direction périphérique, dans lequel des dents individuelles (56) présentent dans la région d'un cercle de pied (62) de la denture (54) une largeur de dent prédéterminée (a) adaptée à la chaîne (12),
dans lequel le galet guide-chaîne (28, 30) présente à au moins une partie des entre-dents (60) dans la région proche d'un fond d'entre-dents (64) et/ou à au moins une partie des dents (56) au moins une partie de guidage (66; 70, 72; 80) avec une plus grande largeur (a+x) que la largeur de dent (a) d'au moins une des dents voisines (56; 56'),
**caractérisé en ce qu'**il est respectivement prévu au moins une partie de guidage (70, 72; 80) sur les deux faces latérales axiales du galet guide-chaîne (28, 30).

2. Galet guide-chaîne (28, 30) selon la revendication 1, **caractérisé en ce que** ladite au moins une partie de guidage (66; 70, 72) est déplacée radialement vers l'intérieur par rapport au fond d'entre-dents (64).

3. Galet guide-chaîne (28, 30) selon la revendication 1 ou 2, **caractérisé en ce que** ladite au moins une partie de guidage (66; 70, 72) est déplacée radialement vers l'intérieur par rapport au cercle de pied (62) de la denture (54).

4. Galet guide-chaîne (28, 30) selon l'une quelconque des revendications 1 à 3, **caractérisé en ce que** ladite au moins une partie de guidage (80) s'étend au moins partiellement le long d'une dent (56).

5. Galet guide-chaîne (28, 30) selon la revendication 4, **caractérisé en ce que** ladite au moins une partie de guidage (80) est située en retrait dans la direction périphérique par rapport au flanc de dent (82).

6. Galet guide-chaîne (28, 30) selon l'une quelconque des revendications précédentes, **caractérisé en ce que** ladite au moins une partie de guidage (70, 72) est formée par une partie annulaire ou un anneau périphérique axialement saillant(e) dans la direction de l'axe de rotation du galet guide-chaîne (28, 30).

7. Galet guide-chaîne (28, 30) selon l'une quelconque des revendications 1 à 5, **caractérisé en ce que** ladite au moins une partie de guidage (66; 80) est formée par une saillie locale saillante axialement dans la direction de l'axe de rotation du galet guide-chaîne (28, 30) dans la région du fond d'entre-dents (64) et/ou d'une dent (56).

8. Galet guide-chaîne (28, 30) selon l'une quelconque des revendications précédentes, **caractérisé en ce que** le galet guide-chaîne (28, 30) est biseauté au moins localement dans la région de flancs de dents tournés l'un vers l'autre ainsi que dans la région du fond d'entre-dents.

9. Galet guide-chaîne (28, 30) selon la revendication 1, **caractérisé en ce que** la partie de guidage est disposée à l'extérieur de la région biseautée.

10. Galet guide-chaîne (28, 30) selon l'une quelconque des revendications 1 et 9, **caractérisé en ce que** ladite au moins une partie de guidage s'étend jusque dans la région biseautée.

11. Galet guide-chaîne (28, 30) selon l'une quelconque des revendications précédentes, **caractérisé en ce que** ladite au moins une région de guidage (66) comprend une saillie polygonale, vue dans la direction de l'axe de rotation (Z), de préférence en forme de parallélogramme, dont la face radialement extérieure est tangente au cercle de pied (62) ou parallèle à une tangente tracée sur le cercle de pied (62).

12. Galet guide-chaîne (28, 30) selon l'une quelconque des revendications précédentes, **caractérisé en ce que** le corps de galet (50) présente des passages axiaux (86) disposés à des distances angulaires régulières.

13. Dérailleur arrière (20) d'un dérailleur d'une bicyclette pour le guidage d'une chaîne (12) avec au moins un galet guide-chaîne (28, 30) selon l'une quelconque des revendications précédentes.
